(19) Europäisches Patentamt / European Patent Office / Office européen des brevets

(11) **EP 2 372 616 A1**

(12) **DEMANDE DE BREVET EUROPEEN**

(43) Date de publication:
**05.10.2011 Bulletin 2011/40**

(51) Int Cl.:
***G06K 19/077*** (2006.01)

(21) Numéro de dépôt: **11160409.6**

(22) Date de dépôt: **30.03.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.03.2010  FR 1052339**

(71) Demandeur: **Oberthur Technologies**
**92300 Levallois-Perret (FR)**

(72) Inventeurs:
• **Bosquet, Olivier**
  **35500 Vitre (FR)**
• **Simonneaux, Gregory**
  **35530 Noyal sur Vilaine (FR)**

(74) Mandataire: **Delumeau, François Guy et al**
**Cabinet Beau de Loménie**
**158, rue de l'Université**
**75340 Paris Cedex 07 (FR)**

(54) **Support comprenant un élément détachable, procédé de détachement d'un tel élément détachable et procédé de fabrication d'un tel support**

(57)     L'invention concerne un support (504) comprenant un élément détachable (502) comportant un contour dont au moins une portion est rattachée au support, les portions de contour rattachées au support l'étant toutes par des attaches fragilisées (506A, 506B), le support comprenant en outre au moins deux lignes de faiblesse (512A, 512B) permettant de séparer le support en au moins deux portions (504A, 504B) reliées par une attache fragilisée à l'élément détachable, chacune des lignes de faiblesse étant telle que, lorsque l'on plie le support le long de cette ligne de faiblesse jusqu'à sa rupture, aucune des attaches fragilisées ne rompt totalement.

L'invention concerne en outre un procédé de détachement d'un tel élément détachable (502) ainsi qu'un procédé de fabrication d'un tel support (504).

FIG.5A

EP 2 372 616 A1

**Description**

L'invention se rapporte au domaine général des mini-cartes fabriquées notamment à partir de cartes en plastique.

L'utilisation des cartes à puce, cartes magnétiques etc. est aujourd'hui extrêmement répandue dans la vie quotidienne. De telles cartes sont par exemple utilisées comme cartes bancaires, cartes d'identification, cartes d'accès etc. et peuvent prendre divers formats selon leur utilisation respective. Par exemple, le format ID-1, correspondant aux dimensions 85,60 mm x 53,98 mm x 0,76 mm, est communément utilisé pour les cartes bancaires, les cartes de fidélité etc. Le format ID-000, correspondant aux dimensions 25 mm x 15 mm, est quant à lui le format le plus utilisé pour les cartes SIM (« *Subscriber Identity Module* » en anglais) en téléphonie mobile GSM ou UMTS. Les formats ID-1 et ID-000 sont définis par la norme ISO/IEC 7816.

Les mini-cartes de format ID-000, par exemple, sont généralement fabriquées à partir d'une carte de format ID-1. Pour ce faire, un corps de carte de format ID-000 est aménagé à l'intérieur d'une carte de format ID-1, le restant de la carte servant ainsi de support. Le corps de carte est alors attaché au support de manière à pouvoir être détaché manuellement.

La figure 1A représente un exemple de mini-carte de type carte SIM tel que décrit dans le document US 5,936,227 (cf. figures 3, 4 et 5 de ce document).

Dans cet exemple, la carte 101 est constituée d'un corps de carte 102 (i.e. la carte SIM), celui-ci étant entouré par un support de carte 104. Deux portions 106A et 106B du contour extérieur du corps de carte 102 servent d'attaches au support de carte 104, les portions 106A et 106B étant opposées l'une de l'autre. Plus particulièrement, les portions 106A et 106B du contour du corps de carte 102 correspondent à des régions fragilisées formant chacune une attache du corps de carte 102 au support de carte 104, ces attaches étant conçues pour être cassées manuellement.

L'attache 106A est formée par une ligne de faiblesse. On entend ici par ligne de faiblesse une ligne dont la fragilité est accrue par rapport à la zone environnante du support, 110.

D'autre part, la portion du contour du corps de carte 102 une seconde de faiblesse au niveau de la jonction entre une étroite languette de fixation 116 et le corps de carte 102. La portion de contour 106B est en outre parallèle à la portion de contour 106A.

Par ailleurs, le contour extérieur du corps de carte 102 est séparé du support de carte 104 par deux zones d'évidement 108A et 108B qui débouchent chacune sur les attaches 106A et 106B. Autrement dit, le contour du corps de carte 102 est constitué :

- des portions de contour 106A et 106B, et
- des zones d'évidement 108A et 108B.

Une ligne de faiblesse 110 est également aménagée sur le support de carte 104 de manière à être interrompue par les zones d'évidement 108A et 108B. Cette ligne de faiblesse 110 divise le support de carte 104 en deux portions de support, à savoir la portion 104A comprenant l'attache 106A et la portion 104B comprenant l'attache 106B. De plus, la ligne de faiblesse 110 est située à proximité de l'attache 106B pour que, lorsque l'on plie le support 104 suivant la ligne de faiblesse 110, l'attache 106B rompt totalement et de manière aisée.

On entendra dans ce document par rupture d'un élément (tel qu'une attache ou une ligne de faiblesse par exemple), la rupture totale de cet élément, sauf indication contraire dans le texte. Autrement dit, une attache rompue signifie que l'attache en question a totalement rompu.

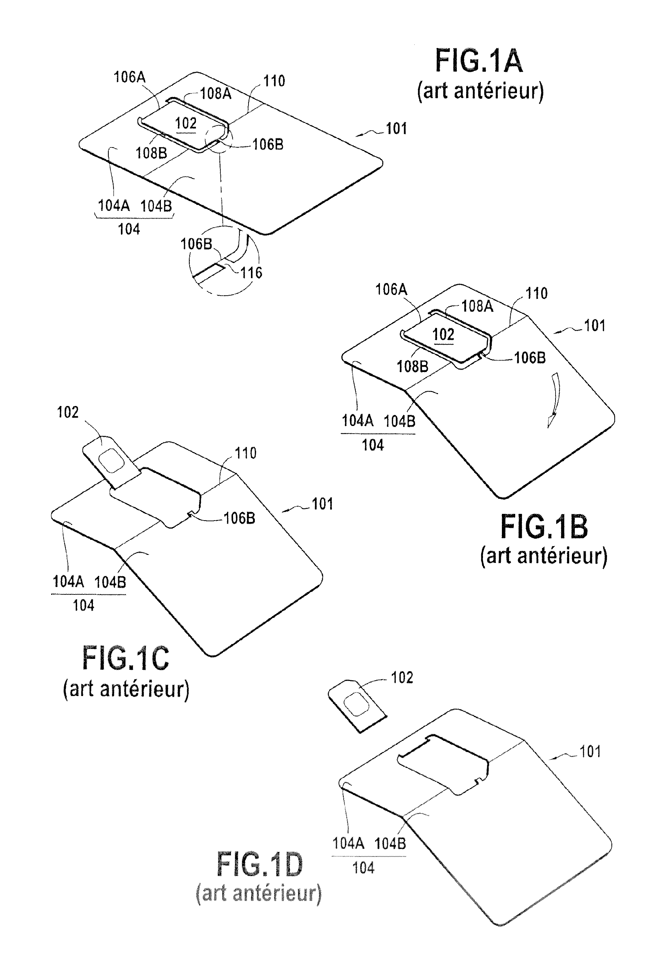

Pour détacher le corps de carte 102 du support de carte 104, l'utilisateur doit tout d'abord plier la portion de support 104B le long de la ligne de faiblesse 110, causant ainsi la rupture de l'attache 106B (figure 1B). Une fois que la portion de contour 106B du corps de carte 102 est dégagée, l'utilisateur plie le corps de carte 102 le long de l'attache 106A afin de rompre cette dernière, libérant ainsi le corps de carte 102 de son support (figures 1C et 1D).

La figure 2 représente un mode de réalisation alternatif décrit dans le document US 5,936,227 (cf. figure 13). Cette alternative diffère de la figure 1 en ce que l'attache 206B est formée par la quasi-totalité d'un des bords du corps de carte 202. En outre, la ligne de faiblesse 201 aménagée dans le support de carte 204 prolonge l'attache 206B.

Le corps de carte 202 est détaché du support de carte 204 de la même manière que celle indiquée ci-dessus en référence au corps de carte 102,

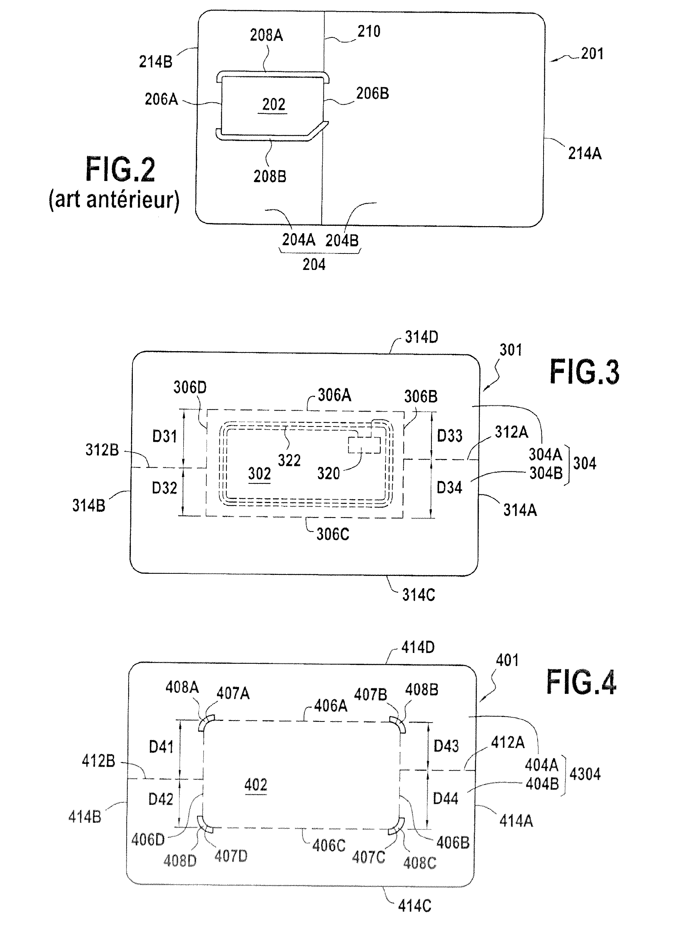

La déposante a cependant observé que les manipulations à réaliser pour détacher le corps de carte en figures 1 et 2 peuvent engendrer des efforts mécaniques importants sur ce corps de carte. Ces efforts peuvent alors être à l'origine de déformations ou de dommages irréversibles au niveau, par exemple, des éventuels contacts métalliques affleurants agencés sur le corps de carte.

De plus, la conception des cartes 110 et 210 présentent plusieurs défauts majeurs.

Concernant plus particulièrement la carte 210, il est nécessaire que la ligne de faiblesse 210 soit disposée dans une zone médiane du support de carte 204, de manière à ce que l'utilisateur puisse aisément saisir les portions 204A et 204B du support et plier ce dernier suivant la ligne de faiblesse 210. La configuration de la carte 201 ne permet donc pas d'agencer un corps de carte 202 de relativement grande taille vis-à-vis du support 204. La taille relative du corps de carte 202 devra en effet être modérée vis-à-vis de celle de la carte 201 de manière à ce que la ligne de faiblesse 210 soit suffisamment éloignée des bords externes 214A et 214B du support de carte 204. Typiquement, la conception de la carte 201 est utilisée pour fabriquer des corps de cartes de format ID-000 à partir d'une carte de format ID-1.

En outre, pour que le corps de carte 202 puisse être détaché facilement de son support, la longueur et/ou la robustesse de l'attache 206B doivent être limitées. Typiquement, les zones d'évidement 208A et 208B entourent au total bien plus de la moitié du contour du corps de carte 202, ce qui limite donc le maintien du corps de carte 202 vis-à-vis du support de carte 204. C'est pourquoi, le corps de carte 202 dispose d'un grand degré de liberté en position attachée, c'est-à-dire lorsque le corps de carte 202 est rattaché au support par les attaches fragilisées 206A et 206B. Ainsi, le corps de carte 202 est susceptible de subir des efforts mécaniques importants (flexion...) en position attachée, lors par exemple de manipulations de la carte 201. Si, par exemple, une force est appliquée accidentellement sur le centre du corps de carte 202 en position attachée, ce dernier est susceptible de se déformer en flexion, et éventuellement, de subir des dommages irréversibles. De plus, une des attaches 206A et 206B est susceptible de rompre de manière inopinée si la force appliquée est trop importante (en particulier l'attache 206B qui est plus courte et donc plus fragile que l'attache 206A),

Plus les zones d'évidement 208A et 208B délimitent une proportion élevée du contour du corps de carte 202, plus les risques de déformations du corps de carte 202 et/ou de ruptures inopinées des attaches fragilisées 206A et 206B sont importants.

Aussi, il existe actuellement un besoin pour un support permettant l'agencement d'un élément détachable (tel qu'un corps de carte, par exemple) de taille relativement importante vis-à-vis du support, et ce tout en assurant un bon maintien de l'élément détachable et en limitant les efforts mécaniques générés lors notamment du détachement de l'élément détachable vis-à-vis du support.

Objet et résumé de l'invention

A cet effet, la présente invention propose un support comprenant un élément détachable comportant un contour dont au moins une portion est rattachée au support, les portions de contour rattachées au support l'étant toutes par des attaches fragilisées, le support comprenant en outre au moins deux lignes de faiblesse permettant de séparer le support en au moins deux portions reliées par une attache fragilisée à l'élément détachable, chacune des lignes de faiblesse étant telle que, lorsque l'on plie le support le long de cette ligne de faiblesse jusqu'à sa rupture, aucune des attaches fragilisées ne rompt totalement.

La présente invention est avantageuse en ce qu'elle permet d'aménager un élément détachable (tel qu'un corps de carte, par exemple) de taille relative importante vis-à-vis du support, et ce tout en assurant un bon maintien de l'élément détachable en position attachée (i.e. attaché au support) et en permettant un détachement aisé de celui-ci.

L'invention peut en outre permettre de limiter avantageusement les contraintes mécaniques imposées à l'élément détachable lorsque l'on détache celui-ci du support.

Dans un mode de réalisation particulier, au moins une portion de contour dite libre de l'élément détachable est séparée du support par une zone d'évidement.

Des telles zones d'évidement peuvent faciliter avantageusement la rupture des lignes de faiblesse et/ou des attaches fragilisées lorsque l'on détache l'élément détachable du support, et ce tout en limitant les contraintes mécaniques imposées à l'élément détachable.

Dans un mode de réalisation particulier, les portions de contour libres forment plus de la moitié du contour de l'élément détachable.

Le contour de l'élément détachable peut comprendre deux dites portions de contour libres situées en vis-à-vis par rapport à l'élément détachable.

Le positionnement en vis-à-vis des portions de contour libres permet d'optimiser le maintien de l'élément détachable en position attachée.

Selon un aspect de l'invention, le contour de l'élément détachable peut comprendre des portions courbes, ces portions courbes faisant toutes partie des portions de contour libres.

Il est ainsi possible d'éviter de former des attaches fragilisées de forme courbe, celles-ci étant plus difficiles à réaliser que des attaches fragilisées rectilignes. Le support ne comprend alors que des attaches fragilisées rectilignes, celles-ci étant en outre plus faciles à rompre lorsque l'on détache l'élément détachable de son support.

Les portions courbes peuvent en outre correspondent aux portions de contour libres. Dans ce cas, seules les portions de contour courbes de l'élément détachable sont séparées du support par une zone d'évidement.

Selon un autre aspect de l'invention, le contour de l'élément détachable peut comprendre des angles, ces angles faisant tous partie des portions de contour libres.

Ces angles peuvent en outre correspondre aux portions de contour libres. Dans ce cas, seules les portions de contour comportant un angle sont séparées du support par une zone d'évidement.

De maniére alternative, l'élément détachable peut comprendre au moins une portion de contour courbe et au moins un angle. De plus, chacun de ces portions de contour courbes et/ou de ces angles peuvent être séparés du support par une zone d'évidement.

De plus, au moins une dite zone d'évidement peut être est reliée à un bord externe du support par une des lignes de faiblesse. Une ligne de faiblesse ainsi reliée à un bord externe du support peut être rompue plus facilement, et ce tout en limitant les contraintes mécaniques imposées à l'élément détachable lorsqu'on détache ce dernier du support.

Dans un mode de réalisation particulier, chaque dite zone d'évidement est reliée à un bord externe du support par une des lignes de faiblesse.

De plus, le support peut comprendre deux dites attaches fragilisées caractérisées en ce que au moins la ligne de faiblesse la plus proche desdites deux attaches fragilisées est agencée de manière à satisfaire la condition suivante :

$$D1 = D2 \pm 20\%$$

D1 et D2 correspondant aux distances respectives entre ladite au moins une ligne de faiblesse et chacune des deux attaches fragilisées.

De cette manière, il est possible de s'assurer que lorsque l'on plie une ligne de faiblesse du support, aucune des attaches fragilisées ne rompt totalement.

Dans une mise en oeuvre particulière, ladite au moins une ligne de faiblesse est sensiblement équidistante desdites deux attaches fragilisées.

Dans un mode de réalisation particulier, le support peut comprendre exactement deux lignes de faiblesse sensiblement parallèles l'une de l'autre. Ces deux lignes de faiblesse peuvent en outre être alignées. Le parallélisme et l'alignement des lignes de faiblesse permettent de faciliter le détachement de l'élément détachable du support.

Le support peut également comporter exactement deux lignes de faiblesse situées dans une région médiane du support. Il est ainsi plus facile pour un utilisateur de saisir le support de part et d'autre des lignes de faiblesse afin de rompre ces dernières.

De plus, au moins une des attaches fragilisées est formée par une ligne de faiblesse ou par une languette étroite.

Par ailleurs, l'élément détachable peut être une carte (i.e. un corps de carte).

L'élément détachable peut en outre comprendre un microcircuit et des moyens de communication avec un dispositif externe. Ces moyens de communication peuvent comprendre, par exemple, au moins une antenne de communication en champ proche et/ou des contacts électriques affleurants,

Dans un mode de réalisation particulier, l'élément détachable est de forme sensiblement rectangulaire de sorte que la longueur (respectivement la largeur) de cet élément détachable représente au moins la moitié de la longueur (respectivement la largeur) du support.

L'invention concerne également un procédé de détachement d'un élément détachable compris dans un support, l'élément détachable comportant un contour dont au moins une portion est rattachée au support, les portions de contour rattachées au support l'étant toutes par des attaches fragilisées, le support comprenant en outre au moins deux lignes de faiblesse permettant de séparer le support en au moins deux portions reliées par une attache fragilisée à l'élément détachable, chacune des lignes de faiblesse étant telle que, lorsque l'on plie le support le long de cette ligne de faiblesse jusqu'à sa rupture, aucune des attaches fragilisées ne rompt totalement, le procédé de détachement comprenant successivement :

- une étape de pliage du support le long de chacune des lignes de faiblesse jusqu'à sa rupture, et
- une étape de rupture des attaches fragilisées pour détacher l'élément détachable du support.

L'invention concerne en outre un procédé de fabrication d'un support comprenant un élément détachable, le procédé de fabrication comprenant :

- une étape de fabrication d'attaches fragilisées rattachant au moins une portion du contour de l'élément détachable au support, les portions de contour de l'élément détachable rattachées au support l'étant toutes par les attaches fragilisées,
- une étape de fabrication d'au moins deux lignes de faiblesse permettant de séparer le support en au moins deux portions reliées par une attache fragilisé à l'élément détachable, chacune des lignes de faiblesse étant telle que, lorsque l'on plie le support le long de cette ligne de faiblesse jusqu'à sa rupture, aucune des attaches fragilisées ne rompt totalement.

On notera que les avantages et commentaires énumérés en référence aux différents modes de réalisation du support de l'invention s'appliquent de la même manière au procédé de détachement et au procédé de fabrication de l'invention.

Brève description des dessins

D'autres caractéristiques et avantages de la présente invention ressortiront de la description faite ci-dessous, en référence aux dessins annexés qui en illustrent un exemple de réalisation. Sur les figures :

- les figures 1A à 1D représentent, de façon schématique, une carte connue de l'art antérieur ainsi que les étapes à effectuer pour procéder au détachement du corps de carte ;
- la figure 2 représente une alternative connue à la carte de la figure 1A ;
- la figure 3 représente, de façon schématique, un support selon un premier mode de réalisation de l'invention ;
- la figure 4 représente, de façon schématique, un support selon un deuxième mode de réalisation de invention ;
- les figures 5A à 5G représentent, de façon schématique, un support selon un troisième mode de réalisation de l'invention ainsi que les étapes à réaliser conformément à un mode de réalisation particulier du procédé de détachement de l'invention ;
- la figure 6 représente, de façon schématique, une première variante au troisième mode de réalisation illustré en figure 5A ;
- la figure 7 représente, de façon schématique, une deuxième variante au troisième mode de réalisation illustré en figure 5A ;
- la figure 8 représente, de façon schématique, un support selon un quatrième mode de réalisation de l'invention ;
- la figure 9 représente, de façon schématique, une variante au quatrième mode de réalisation illustré en figure 8 ;
- la figure 10 représente, sous forme d'un organigramme, les principales étapes d'un procédé de fabrication conforme à un mode particulier de réalisation de l'invention ; et
- les figures 11A à 11E représentent, de façon schématique, des exemples de réalisation d'une ligne de faiblesse.

Description détaillée de plusieurs modes de réalisation

L'invention concerne un support comprenant un élément détachable, l'élément détachable étant fixé au support de manière à pouvoir être détaché manuellement. L'invention s'applique tout particulièrement à un support de format ID-1 comprenant un corps de carte de format ID-000. On comprendra toutefois que l'invention s'applique de la même manière pour des supports et éléments détachables dont les forme et taille sont quelconques.

La figure 3 représente une carte 301 selon un premier mode de réalisation de l'invention. Dans cet exemple, la carte 301 est constituée d'un support 304, celui-ci comprenant un élément détachable prenant ici la forme d'un corps de carte 302.

L'élément détachable (i.e. le corps de carte 302) est dans cet exemple sensiblement rectangulaire et présente des angles en chacun de ses coins. Le contour rectangulaire du corps de carte 302 est ainsi constitué de quatre portions de contour rectilignes notées 306A, 306B, 306C et 306D (notées collectivement 306).

De plus, dans cet exemple, chacune des portions de contour 306 du corps de carte 302 forme un attache fragilisée du corps de carte au support 304.

Le support 304 comprend en outre deux lignes de faiblesse 312A et 312B permettant de séparer le support en deux portions 304A et 304B reliées par une attache fragilisée au corps de carte 302. Plus particulièrement, la portion 304A du support est reliée au corps de carte 302 par l'attache fragilisée 306A (et également par une portion des attaches fragilisées 306B et 306D). De même, la portion 304B du support est reliée au corps de carte 302 par l'attache fragilisée 306C (et également par une portion des attaches fragilisées 306B et 306D).

Ainsi, la ligne de faiblesse 312A (respectivement 312B) relie un point de l'attache fragilisée 306B (respectivement 306D) à un bord externe 314A (respectivement 314B) du support 304.

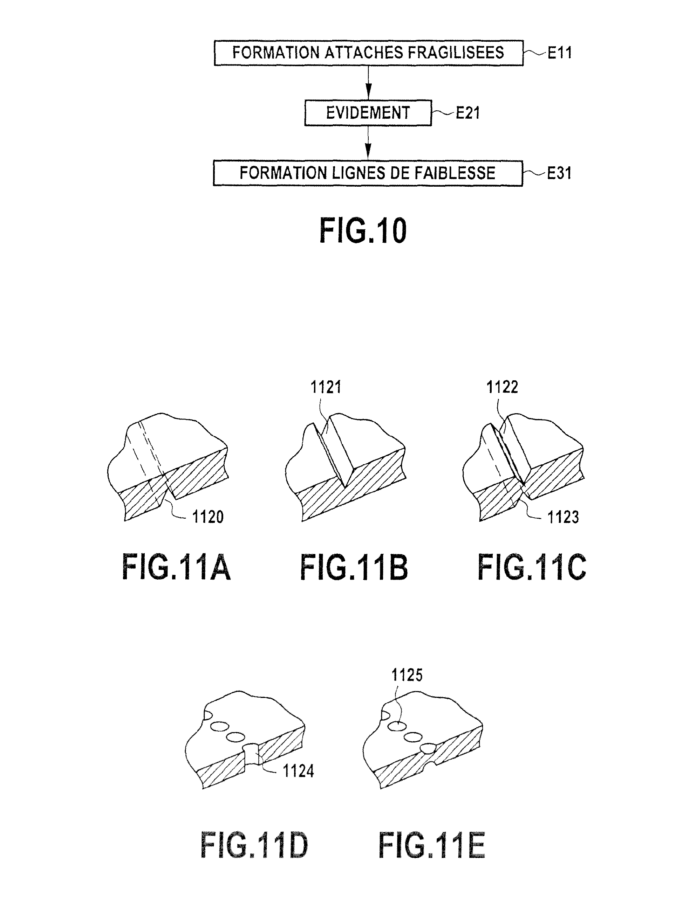

Comme indiqué précédemment, une ligne de faiblesse est une ligne présentant une fragilité accrue par rapport à la zone environnante du support, ceci afin de se plier et de rompre de manière privilégiée lorsque certaines actions mécaniques sont exercées sur celle-ci. Des exemples de lignes de faiblesse sont décrits plus en détail ultérieurement en référence aux figures 11A à 11E.

Dans l'exemple considéré ici, chacune des attaches fragilisées 306 est également formée par une ligne de faiblesse.

Par ailleurs, chacune des lignes de faiblesse 312A et 312B du support 304 est telle que, lorsque l'on plie le support le long de cette ligne de faiblesse jusqu'à sa rupture, aucune des attaches fragilisées 306 ne rompt totalement.

Il est possible de jouer sur plusieurs aspects du support pour garantir qu'aucune attache fragilisée 306 ne rompt lorsque l'on plie les lignes de faiblesse 312A et 312B jusqu'à leur rupture. On peut, par exemple, ajuster la robustesse des lignes de faiblesse 312A et 312B par rapport à celle des attaches fragilisées 306 et/ou jouer sur la position des lignes de faiblesse 312A et 312B vis-à-vis des attaches fragilisées les plus proches, à savoir les attaches fragilisés 306A et 306C.

Plus précisément, en formant des lignes de faiblesse 312A et 312B suffisamment fragiles par rapport aux attaches fragilisées 306, on peut s'assurer que les lignes de faiblesse sont conformes à l'invention.

D'autre part, la ligne de faiblesse 312A (respectivement 312B) débouche sur un point de l'attache fragilisée 306B (respectivement 306D) situé à une distance D33 (respectivement D31) de l'attache fragilisée 306A et à une distance D34 (respectivement D32) de l'attache fragilisée 306C.

Dans une mise en oeuvre particulière, les distances D31 à D34 sont telles que :

$$D31 = D32 \pm 20\%, \text{ et}$$

$$D33 = D34 \pm 20\%,$$

Dans le mode de réalisation de la figure 3, la ligne de faiblesse 312A est sensiblement équidistante des attaches fragilisées voisines 306A et 306C et/ou la ligne de faiblesse 312B est sensiblement équidistante des attaches fragilisées voisines 306A et 306C. En d'autres termes, D33 est égale à D34 $\pm$ 5% et/ou D31 est égale à D32 $\pm$ 5%.

Dans une variante, la ligne de faiblesse 312A est équidistante des attaches fragilisées 306A et 306C et/ou la ligne de faiblesse 312B est équidistante des attaches fragilisées 306A et 306C. En d'autres termes, D33=D34 et/ou D31 = D32.

Pour déterminer si les lignes de faiblesse aménagées dans le support sont correctement conçues, un test dit de conformité peut être réalisé. Ce test consiste à plier localement le support 304 le long de la ligne de faiblesse 312A jusqu'à sa rupture. Une fois la ligne de faiblesse 312A rompue, on vérifie si l'une des attaches fragilisées 306 a totalement rompu. Si tel est le cas, on considère que la ligne de faiblesse 312A n'est pas conforme à l'invention. Ceci peut s'expliquer, par exemple, par le fait que cette ligne de faiblesse était trop fragile et/ou agencée trop près de l'attache fragilisée qui a rompu Si, en revanche, aucune des attaches fragilisées 306A à 306D n'est rompue à l'issue du test, on considère que la ligne de faiblesse 312A est conforme à l'invention. Le même test peut ensuite être réalisé en relation avec la ligne de faiblesse 312B.

La figure 4 représente une carte 401 selon un deuxième mode de réalisation de l'invention. Dans cet exemple, la carte 401 est constituée d'un support 404 comprenant un élément détachable prenant la forme d'un corps de carte 402. Dans cet exemple, le corps de carte 402 est de forme sensiblement rectangulaire et présente des portions de contour courbes 407A, 407B, 407C et 407D (notées collectivement 407) en chacun de ses coins.

La carte 401 diffère principalement de la carte 301 en ce que des zones d'évidement 408A, 408B, 408C et 408D (notées collectivement 408) séparent respectivement les portions de contour courbes 407A, 407B, 407C et 407D du support 404. Les avantages découlant de l'ajout de ces zones d'évidement seront décrits plus en détails ultérieurement.

Dans la suite de ce document, les portions de contour d'un élément détachable qui sont séparées du support par une zone d'évidement sont appelées des portions de contour libres.

Par ailleurs, les portions de contour du corps de carte 402 dépourvues de zone d'évidement forment chacune une attache fragilisée 406A, 406B, 406C et 406D (notées collectivement 406) du corps de carte 402 au support 404.

Le contour du corps de carte 402 est donc formé par :

- les portions de contour 406 formant chacune une attache fragilisée, et
- les portions de contour libres 407 correspondant aux portions de contour courbes du corps de carte 402.

De plus, le support 404 comporte dans cet exemple deux lignes de faiblesse 412A et 412B permettant de séparer le support 404 en deux portions 404A et 404B reliées par une attache fragilisée au corps de carte 402. Plus particulièrement, la portion 404A du support 404 est reliée au corps de carte 402 par l'attache fragilisée 406A (et également par une portion des attaches fragilisées 406B et 406D). De même, la portion 404B du support est reliée au corps de carte 402 par l'attache fragilisée 406C (et également par une portion des attaches fragilisées 406B et 406D).

En outre, dans ce mode de réalisation, la ligne de faiblesse 412A (respectivement 412B) relie un point de l'attache fragilisée 406B (respectivement 406D) à un bord externe 414A (respectivement 414B) du support 404.

Chacune des lignes de faiblesse 412A et 412B est telle que, lorsque l'on plie le support 404 le long de cette ligne de faiblesse jusqu'à sa rupture, aucune des attaches fragilisées 406 ne rompt totalement.

De plus, la ligne de faiblesse 412A (respectivement 412B) débouche sur un point de l'attache fragilisée 406B

EP 2 372 616 A1

(respectivement 406D) situé à une distance D43 (respectivement D41) de l'attache fragilisée 406A et à une distance D44 (respectivement D42) de l'attache fragilisée 406C.

De la même manière que pour la carte 301 de la figure 3, il est possible d'adapter notamment la robustesse des lignes de faiblesse 412A et 412B et/ou la position de celles-ci vis-à-vis des attaches fragilisées 406A et 406C afin que ces lignes de faiblesse soient conformes à l'invention. En particulier, les exemples de positionnement décrits précédemment pour les lignes de faiblesse 312A et 312B dans la carte 301 s'appliquent de la même manière à la carte 401.

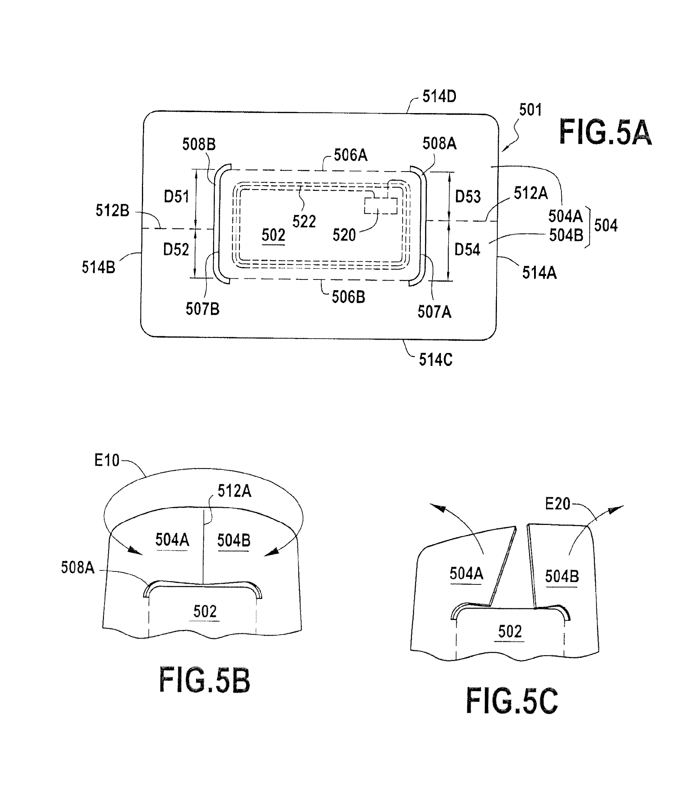

La figure 5A représente une carte 501 selon un troisième mode de réalisation de l'invention. Dans cet exemple, la carte 501 est constituée d'un support 504 comprenant un élément détachable prenant la forme d'un corps de carte 502. La carte 501 est obtenue en modifiant l'arrangement de la carte 401 de manière à aménager une zone d'évidement le long de chacune des portions de contour libres 406B et 406D afin d'unir les zones d'évidement 408B et 408C d'une part, et les zones d'évidement 408A et 408D d'autre part.

Ainsi, les portions de contour dites libre 507A et 507B (notées collectivement 507) du corps de carte 502 sont séparée du support 504 par les zones d'évidement 508A et 508B, respectivement. Les avantages découlant de ces zones d'évidement étendues seront décrits plus en détails ultérieurement.

Par ailleurs, les portions de contour 506A et 506B (notées collectivement 506) du corps de carte 502 dépourvues de zone d'évidement forment chacune une attache fragilisée du corps de carte au support 504.

Le contour du corps de carte 502 est donc constitué :

- des portions de contour 506A et 506B formant chacune une attache fragilisée, et
- des portions de contour libres 507A et 507B.

Dans l'exemple considéré ici, chacune des attaches fragilisées 506 est formée par une ligne de faiblesse représentée par une ligne en pointillés sur la figure 5A.

Le support 504 comprend en outre deux lignes de faiblesse 512A et 512B permettant de séparer le support en deux portions 504A et 504B reliées par une ligne de faiblesse à l'élément détachable (i.e. le corps de carte 502). Plus particulièrement, les portions 504A et 504B du support 504 sont reliées au corps de carte 502 par les attaches fragilisée 506A et 506B, respectivement.

Chacune de ces lignes de faiblesse est telle que, lorsque l'on plie le support 504 le long de cette ligne de faiblesse jusqu'à sa rupture, aucune des attaches fragilisées 506 ne rompt totalement.

Dans cet exemple, la ligne de faiblesse 512A (respectivement 512B) relie un point du bord externe de la zone d'évidement 508A (respectivement 508B) au bord externe 514A (respectivement 514B) du support 504.

De plus, la jonction entre la ligne de faiblesse 512A (respectivement 512B) et le bord externe de la zone d'évidement 508A (respectivement 508B) est située à une distance D53 (respectivement D51) de l'attache fragilisée 506A et à une distance D54 (respectivement D52) de l'attache fragilisée 506B.

De la même manière que pour les cartes 301 et 401, il est possible d'adapter notamment la robustesse des lignes de faiblesse 512A et 512B et/ou la position de celles-ci vis-à-vis des attaches fragilisées 506A et 506B afin que ces lignes de faiblesse soient conformes à l'invention. En particulier, les exemples de positionnement décrits précédemment pour les lignes de faiblesse 312A et 312B dans la carre 301 s'appliquent de la même manière à la carte 501.

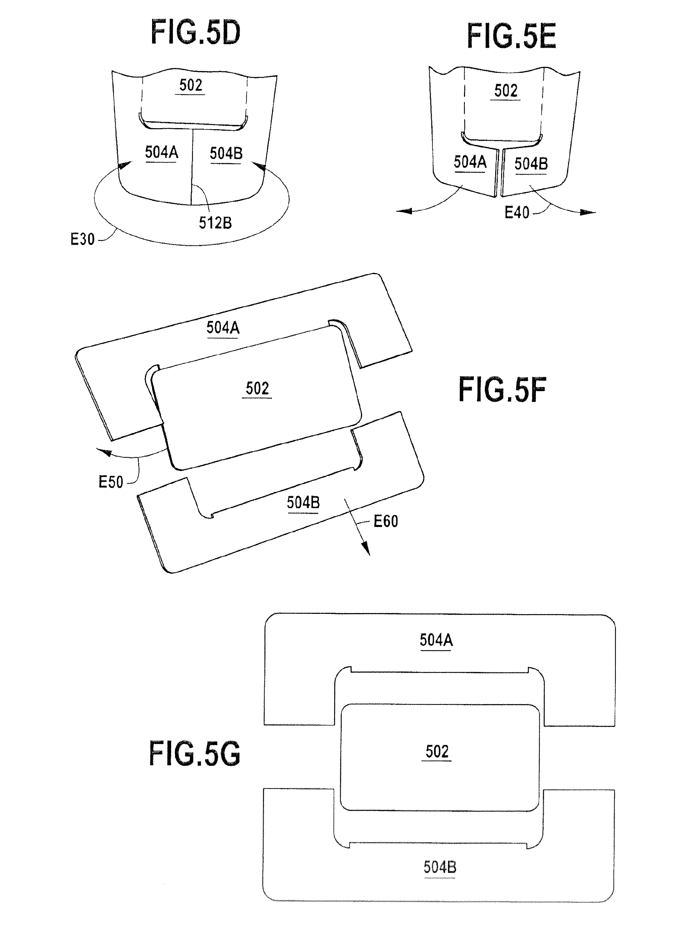

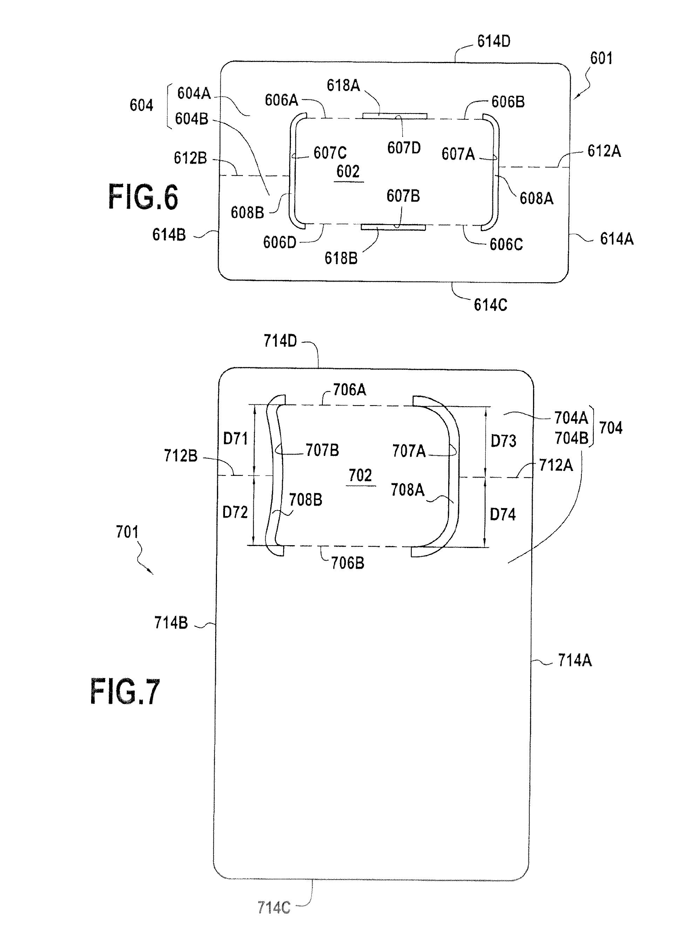

La carte 601 représentée en figure 6 est une variante de la carte 501 représentée en figure 5. La carte 601 est constituée d'un support 604 comprenant un élément détachable prenant la forme d'un corps de carte 602. La carte 601 diffère uniquement de la carte 501 en ce que des zones d'évidement supplémentaires 618A et 618B sont aménagées le long du contour du corps de carte 602, de manière à réduire la longueur des attaches fragilisées du corps de carte au support.

Ainsi, la portion 604A du support 604 est rattachée au corps de carte 602 par les attaches fragilisées 606A et 606B, celles-ci étant séparées par la zone d'évidement 618A. De même, la portion 604B du support 604 est rattachée au corps de carte 602 par les attaches fragilisées 606C et 606D, celles-ci étant séparées par la zone d'évidement 618B. Par ailleurs, dans cet exemple, les zones d'évidement 618A et 618B ne sont pas reliées à un bord externe du support 608 par une ligne de faiblesse.

Les avantages découlant de ces zones d'évidement supplémentaires 618A et 618B seront décrits plus en détails ultérieurement.

La figure 7 représente une autre variante à l'agencement de la carte 501. Dans cet exemple, la carte 701 est constituée d'un support 704 comprenant un élément détachable prenant ici la forme d'un corps de carte 702. Les portions de contour 706A et 706B du corps de carte 702 forment chacune une attache fragilisée du corps de carte 702 au support 704.

De plus, les zones d'évidement 708A et 708B séparent respectivement les portions de contour libres 707A et 707B du corps de carte 702 vis-à-vis du support 704.

Le support 704 comprend en outre deux lignes de faiblesse 712A et 712B permettant de séparer le support en deux portions 704A et 704B reliées par une ligne de faiblesse au corps de carte 702. Plus particulièrement, les portions 704A et 704B du support 704 sont reliées au corps de carte 702 par les attaches fragilisées 706A et 706B, respectivement.

La carte 701 diffère principalement de la carte 501 en ce que la portion de support 704A reliée à l'attache fragilisée est de taille très inférieure à la portion de support 704B reliée à l'attache fragilisée 7068. En conséquence, le corps de carte 702 est situé à une plus grande distance du bord externe 714C du support 704 que du bord externe 714D du support 704. De ce fait, les lignes de faiblesses 712A et 712B reliant respectivement les zones d'évidement 708A et 708B aux bords externes 714A et 714B du support 704 ne sont pas situées dans une zone médiane du support.

De plus, la ligne de faiblesse 712A (respectivement 712B) débouche sur un point du bord externe de la zone d'évidement 708A (respectivement 708B) situé à une distance D73 (respectivement D71) de l'attache fragilisée 706A et à une distance D74 (respectivement D72) de l'attache fragilisée 706B.

De la même manière que pour les modes de réalisation précédents, il est possible d'adapter notamment la robustesse des lignes de faiblesse 712A et 712B et/ou la position de celles-ci vis-à-vis des attaches fragilisées 706A et 706B afin que les lignes de faiblesse soient conformes à l'invention. En particulier, les exemples de positionnement décrits précédemment pour les lignes de faiblesse 312A et 312B dans la carte 301 s'appliquent de la même manière à la carte 701.

Par ailleurs, on notera qu'il est possible d'aménager un deuxième corps de carte (non représenté dans la figure 7) dans la portion de support 704B, entre le corps de carte 702 et le bord externe 714C. De cette manière, on peut avantageusement utiliser un même support pour contenir deux ou une pluralité de corps de carte.

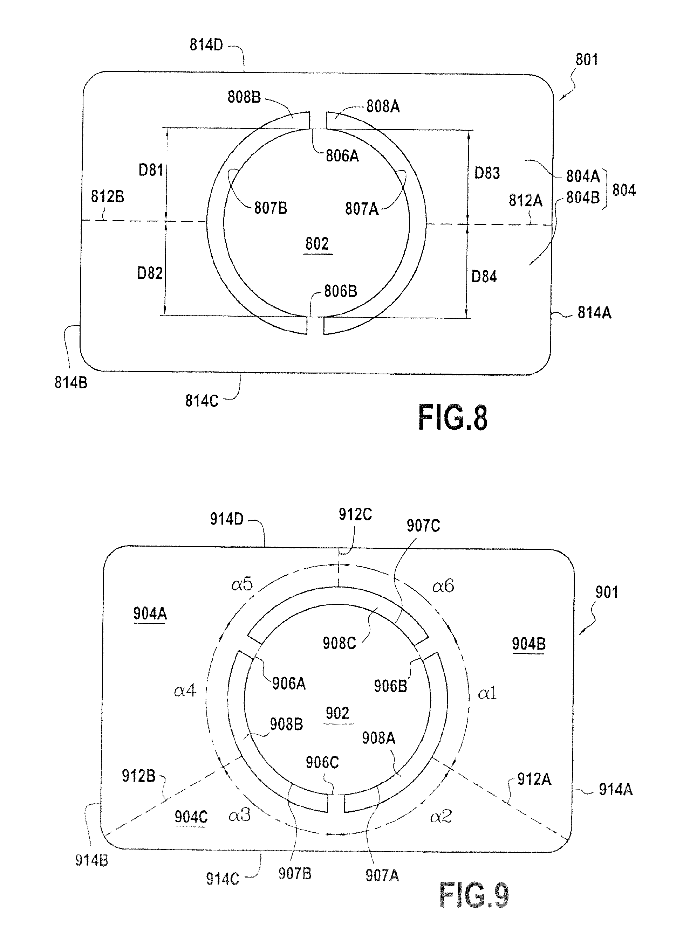

La figure 8 représente une carte 801 selon un quatrième mode de réalisation de l'invention. Dans cet exemple, la carte 801 est constituée d'un support 804 comprenant un élément détachable prenant la forme d'un corps de carte sensiblement circulaire 802. Le contour du corps de carte 802 comprend deux portions 806A et 806B étroites rattachées au support 804, chacune de ces portions formant une attache fragilisée du corps de carte 802 au support 804.

Dans cet exemple, les attaches fragilisées 806A et 806B sont positionnées en vis-à-vis par rapport au corps de carte 802 ce qui permet d'optimiser le maintien du corps de carte 802 vis-à-vis du support 804.

De plus, les zones d'évidement 808A et 808B séparent le reste du contour du corps de carte, à savoir les portions de contour libres 807A et 807B respectivement, du support 804.

Le contour du corps de carte 802 est ainsi formé par :

- les portions de contour 806A et 806B, et
- les portions de contour libres 807A et 807B.

La conception de la carte 801 diffère principalement de la carte 501 en ce que le corps de carte (et les zones d'évidement) est de forme circulaire.

Par ailleurs, la ligne de faiblesse 812A (respectivement 812B) débouche sur un point du bord externe de la zone d'évidement 808A (respectivement 808B) situé à une distance D83 (respectivement D81) de l'attache fragilisée 806A et à une distance D84 (respectivement D82) de l'attache fragilisée 806B.

De la même manière que pour les modes de réalisation précédents, il est possible d'adapter notamment la robustesse des lignes de faiblesse 812A et 812B et/ou la position de celles-ci vis-à-vis des attaches fragilisées 806A et 806B afin que ces lignes de faiblesse soient conformes à l'invention. En particulier, les exemples de positionnement décrits précédemment pour les lignes de faiblesse 312A et 312B dans la carte 301 s'appliquent de la même manière à la carte 801.

La carte 901 représentée en figure 9 est une variante de la carte 801. La carte 901 est constituée d'un support 904 comprenant un élément détachable prenant ici la forme d'un corps de carte sensiblement circulaire 902. La carte 901 diffère uniquement de la carte 801 en ce que le contour du corps de carte 902 est rattachée au support 904 au niveau de trois portions de contour 906A, 906B et 906C, chacune de ces portions formant une attache fragilisée du corps de carte 902 au support 904. De plus, le support 904 comprend trois zones d'évidement notées collectivement 908 :

- la zone d'évidement 908A débouchant sur les attaches fragilisées 906B et 906C de manière à séparer la portion de contour dite libre 907A du corps de carte vis-à-vis du support 904,
- la zone d'évidement 908B débouchant sur les attaches fragilisées 906A et 906C de manière à séparer la portion de contour dite 907B du corps de carte vis-à-vis du support 904, et
- la zone d'évidement 908C débouchant sur les attaches fragilisées 906A et 906B de manière à séparer la portion de contour dite libre 907C du corps de carte vis-à-vis du support 904.

Le contour du corps de carte 902 est donc formé par :

- les attaches fragilisées 906A, 906B et 906C (notées collectivement 906), et

- les portions de contour libres 707A, 707B et 707C (notées collectivement 707).

De plus, dans cet exemple, chacune des zones d'évidement 908 est reliée à un bord externe du support de carte 904 par une ligne de faiblesse. Plus particulièrement, la ligne de faiblesse 912A relie la zone d'évidement 908A au bord externe noté 914A du support de carte 904. De même, les lignes de faiblesse 912B et 912C relient respectivement les zones d'évidement 908B et 908C aux bords externes 914B et 914C du support de carte 904. Les lignes de faiblesse 912A, 912B et 912C du support définissent ainsi trois portions distinctes du support 904, à savoir :

- la portion de support 904A reliée au corps de carte 902 par l'attache fragilisée 906A,
- la portion de support 904B reliée au corps de carte 902 par l'attache fragilisée 906B, et
- la portion de support 904C reliée au corps de carte 902 par l'attache fragilisée 906C.

De plus, chacune des lignes de faiblesse 912A, 912B et 912C est telle que, lorsque l'on plie le support 904 le long d'une de ces lignes de faiblesse jusqu'à sa rupture, aucune des attaches fragilisées 906A, 906B et 906C ne rompt totalement.

De la même manière que pour les modes de réalisation précédents, il est possible d'adapter notamment la robustesse des lignes de faiblesse 912A, 912B et 912C et/ou la position de celles-ci afin de s'assurer que ces lignes de faiblesse sont conformes à l'invention.

Le test de conformité décrit précédemment peut en particulier être appliqué pour déterminer si les lignes de faiblesse 912A 912B et 912C sont conçues correctement.

Plus précisément, la ligne de faiblesse 912A est située respectivement à des distances angulaires $\alpha1$ et $\alpha2$ des deux attaches fragilisées les plus proches, à savoir les attaches 906B et 906C. De même, la ligne de faiblesse 912B est située respectivement à des distances angulaires $\alpha3$ et $\alpha4$ des deux attaches fragilisées les plus proches 906C et 906A. Enfin, la ligne de faiblesse 912C est située respectivement à des distances angulaires $\alpha5$ et $\alpha6$ des attaches fragilisées les plus proches 906A et 906B.

Dans un mode particulier, les distances angulaires sont telles que :

$$\alpha1 = \alpha2 \pm 20\%$$

$$\alpha3 = \alpha4 \pm 20\%$$

$$\alpha5 = \alpha6 \pm 20\%$$

Dans le cas représenté en figure 9, les lignes de faiblesse 912A, 912B et 912C sont chacune sensiblement équidistantes à leurs deux attaches fragilisées les plus proches. Cela signifie que :

$$\alpha1 = \alpha2 \pm 5\%$$

$$\alpha3 = \alpha4 \pm 5\%$$

$$\alpha5 = \alpha6 \pm 5\%$$

Selon une autre alternative, les distances angulaires sont telles que :

$$\alpha1 = \alpha2 = \alpha3 = \alpha4 = \alpha5 = \alpha6 = 60°$$

Dans les modes de réalisation décrits précédemment, l'élément détachable présente une forme sensiblement rectangulaire ou sensiblement circulaire.

Plus particulièrement, dans les exemples représentés en figures 3 à 6, l'élément détachable présente une forme sensiblement rectangulaire. Dans chacun de ces exemples, l'élément détachable peut présenter, par exemple,

EP 2 372 616 A1

les dimensions 48 mm x 25 mm, le support étant par exemple au format ID-1.

On notera cependant que l'élément détachable peut présenter une forme quelconque. En particulier, l'élément détachable présenter au moins une portion de contour courbe et/ou au moins une portion de contour rectiligne. De plus, il n'est pas nécessaire que l'élément détachable présente des portions de contour parallèles.

Par ailleurs, l'élément détachable peut correspondre à un corps de carte ou à tout autre élément détachable pouvant être rattaché au support conformément à l'invention.

D'autre part, il est précisé que l'élément détachable et le support décrits dans les différents modes de réalisation ci-dessus sont en plastique. Cependant, d'autres matériaux peuvent être utilisés pour former l'élément détachable et/ou le support, comme par exemple un métal ou un alliage de métaux.

Le procédé de détachement selon un mode de réalisation particulier de l'invention est à présent décrit en référence aux figures 5B à 5G, ces figures illustrant les étapes à réaliser pour détacher le corps de carte 502 du support 504.

Pour détacher le corps de carte 502 de son support, le support 504 doit dans un premier temps être séparé individuellement au niveau des lignes de faiblesse 512A et 512B. Pour ce faire, le support 504 est tout d'abord plié localement suivant la ligne de faiblesse 512A de manière à rompre cette dernière (étape E10, figure 5B). Les portions 504A et 504B sont alors séparées l'une de l'autre dans cette région du support 504 (étape E20, figure 5C). Les portions 504A et 504B sont ensuite pliées (étape E30) et séparées (étape E40) de la même manière le long de la ligne de faiblesse 512B (figures 5D et 5E). A ce stade, les portions de support 504A et 504B ne sont plus attachées l'une à l'autre. Ces portions 504A et 504B restent cependant reliées au corps de carte 502 par les attaches fragilisées 506A et 506B, respectivement.

On notera que l'on peut également plier les lignes de faiblesse 512A et 512B de manière simultanée jusqu'à leur rupture.

Une fois le support 504 séparé au niveau des lignes de faiblesse 512A et 512B, on rompt les attaches fragilisées 506A et 506B. Dans cet exemple, les attaches fragilisées sont formées par des lignes de faiblesse. Les portions de support 504A et 504B sont par conséquent pliées (étape E50) puis séparées (étape E60) du corps de carte 502 (figure 5F). Le pliage et la rupture des attaches fragilisées 506A et 506B peut se faire de manière séquentielle ou simultanée. Le corps de carte 502 est ainsi détaché totalement du support 504 (figure 5G).

Le procédé de détachement de l'invention s'applique de la même manière aux autres modes de réalisation précédemment décrits.

A noter qu'une attache fragilisée peut être formée par une languette étroite comme la languette 116 illustrée en figure 1A, celle-ci étant munie ou dépourvue de ligne de faiblesse. Dans ce cas, on peut par exemple rompre la languette étroite constituant l'attache fragilisée en exerçant une pression, une torsion, un pliage, ou une combinaison d'au moins deux de ces actions.

On notera également que le procédé de détachement de l'invention s'applique de la même manière quelque soit la forme de l'élément détachable considéré.

L'invention est avantageuse en ce qu'elle permet d'agencer un élément détachable de format important vis-à-vis du format du support, et ce tout en garantissant un bon maintien de l'élément détachable vis-à-vis du support.

L'invention permet, par exemple, d'emménager dans un support un élément détachable de forme sensiblement rectangulaire de sorte que la longueur (respectivement la largeur) de cet élément détachable représente au moins la moitié de la longueur (respectivement la largeur) du support.

L'invention permet en outre d'assurer un bon maintien de l'élément détachable en position attachée, et ce quelque soit la taille de ce dernier.

Dans le cas de la figure 3, par exemple, la totalité du contour de l'élément détachable 302 est rattachée au support 304 (absence de zones d'évidement entre le contour du corps de carte 302 et le support 304). Cet agencement permet de garantir un maintien optimal du corps de carte 302 en position attachée (i.e. attachée au support 304), réduisant ainsi les risques d'endommagements du corps de carte (déformations en flexion...) et de ruptures inopinées des attaches fragilisées 306A et 306B.

Par ailleurs, dans les exemples des figures 5A, 6, 7, 8 et 9, les zones d'évidement sont agencées en vis-à-vis les unes des autres par rapport au corps de carte. Cette disposition permet d'uniformiser le maintien du corps de carte le long de son contour. En comprendra en revanche que les zones d'évidement peuvent ne pas être en vis-à-vis.

L'invention est également avantageuse en ce qu'elle garantit un bon maintien de l'élément détachable, et ce tout en permettant un détachement aisé de celui-ci conformément au procédé de détachement de l'invention,

La possibilité d'agencer un élément détachable de grande taille par rapport au support présente de nombreux avantages.

Par exemple, il est fréquent aujourd'hui d'utiliser un outil de préhension munit d'une ventouse pour manipuler une carte lors de sa fabrication. Pour ce faire, la ventouse vient généralement se fixer sur le corps de carte. Cependant, une bonne adhérence n'est en général possible que si la ventouse est disposée sur une surface pleine dépourvue de zone d'évidement. L'invention permet donc d'agencer un corps de carte de taille importante vis-à-vis de son support, et par conséquent, d'utiliser des ventouses de taille importante, ce qui facilite les manipulations de la carte au cours de sa fabrication.

On peut en outre adapter la disposition des zones d'évidement du support en fonction de la forme de la ventouse à utiliser.

Par ailleurs, pour chaque mode de réalisation décrit ci-avant, divers composants peuvent être agencés dans le corps de carte, comme, par exemple, un microcircuit et des moyens de communications avec un dispositif externe.

Ces moyens de communication peuvent comprendre, par exemple, des contacts électriques affleurants (comme agencés dans les cartes à puce, par exemple) et/ou une antenne de communication en champ proche.

Dans le mode de réalisation de la figure 3, par exemple, le corps de carte 302 comprend un circuit de communication en champ proche comprenant une puce électronique 320 reliée à une antenne de communication en champ proche 322. Un dispositif en champ proche permet l'établissement d'une communication sans contact avec un dispositif externe pour échanger des données (selon la norme ISO 14 443, par exemple).

L'antenne 322 est formée par exemple par une pluralité de spires électriquement conductrices, cette antenne délimitant une surface utile de réception d'un champ magnétique. Par surface utile, on entend la surface de l'antenne qui, traversée par un champ magnétique, produit un courant induit circulant dans l'antenne 322.

Or, les performances de l'antenne 322 sont directement liées à sa taille et plus précisément à la taille de la surface utile qu'elle délimite. L'invention est avantageuse en ce qu'elle offre la possibilité d'agencer un corps de carte 302 de taille importante vis-à-vis du support de carte 304, permettant ainsi d'y aménager une antenne 322 avec une grande surface utile, l'antenne étant de ce fait plus performante pour communiquer avec un dispositif externe.

Chacun des modes de réalisation décrits ci-avant est compatible avec l'arrangement de la puce 320 et de l'antenne 322 représenté en figure 3 (et de la même manière en figure 5A).

A noter que, pour assurer une transmission optimale des données entre un tel circuit de communication et un dispositif externe, le corps de carte peut être recouvert d'une couche de blindage magnétique (couche de ferrite par exemple). Cette couche de blindage (non représentée sur les figures) permet notamment de réduire les perturbations magnétiques pouvant être générées par un environnement métallique situé à proximité du circuit de communication. En outre, cette couche de blindage peut être recouverte d'un revêtement adhésif (non représentée sur les figures). Une fois le corps de carte détaché de son support, ce revêtement adhésif permet de rapporter le corps de carte par collage sur la surface d'un support quelconque.

Par ailleurs, les zones d'évidement décrites précédemment en référence aux différents modes de réalisation de l'invention présentent notamment les avantages suivants.

Les zones d'évidement 408 agencées dans la carte 401, par exemple, sont avantageuses en ce qu'elles offrent un certain degré de liberté au corps de carte 402 vis-à-vis du support 404, et ce tout en conservant un bon maintien du corps de carte 402 en position attachée.

Ces zones d'évidement permettent notamment de rompre plus facilement les attaches fragilisées 406B et 406D une fois les lignes de faiblesse 412A et 412B rompues. De plus, contrairement à l'arrangement des figures 1A et 2, les portions de contour libres 407 représentent ici une proportion relativement faible du contour du corps de carte 402, la majorité du contour formant des attaches fragilisées du corps de carte au support. Le maintien du corps de carte 402 reste donc de meilleur qualité que pour les corps de carte 102 et 202, par exemple.

Les zones d'évidement 408 permettent aussi de limiter les contraintes mécaniques générées sur le corps de carte 402 lors de son détachement, en particulier lorsque l'on rompt les attaches fragilisées 406.

Ces zones d'évidement sont également avantageuses en ce qu'elles permettent de séparer toutes les portions de contour courbes de l'élément détachable vis-à-vis du support. De cette manière, on peut éviter d'aménager des attaches fragilisée courbes, celles-ci étant plus difficiles à former et à rompre que des attaches fragilisées rectilignes. Il est ainsi possible de ne former que des attaches fragilisées rectilignes, même lorsque le contour de l'élément détachable comporte au moins une portion courbe.

Par ailleurs, comme illustré sur les figures 5B à 5F, les zones d'évidement 508A et 508B aménagées dans la carte 501 offrent un certain degré de liberté au support 504 au niveau des lignes de faiblesse 512A et 512B. Ces zones d'évidement 508A et 508B permettent ainsi de rompre plus facilement les lignes de faiblesse 512A et 512B lors du procédé de détachement de l'invention. Ceci s'explique par le fait que les lignes de faiblesse 512A et 512B ne débouchent pas directement sur le contour du corps de carte 502 mais débouche sur une zone d'évidement.

Le jeu offert par exemple par la zone d'évidement 508A (respectivement 508B) entre le corps de carte 502 et la ligne de faiblesse 512A (respectivement 512B) permet en outre de limiter les contraintes mécaniques générées sur le corps de carte 502 lors du procédé de détachement, notamment lorsque l'on rompt la ligne de faiblesse 512A (respectivement 512B) (figures 5B et 5C).

De plus, plus la ligne de faiblesse débouche sur une zone proche du centre de la zone d'évidement considérée, plus le jeu offert par cette dernière est important (et donc plus il est facile de rompre la ligne de faiblesse, et ce sans imposer de contraintes mécaniques importantes au corps de carte).

On notera cependant qu'il n'est pas essentiel que chacune des lignes de faiblesse aménagées dans le support débouche sur une zone d'évidement (comme représenté en figures 3 et 4, par exemple). Une ligne de faiblesse débouchant directement sur le contour du corps de carte sera en revanche plus difficile à rompre qu'une ligne de faiblesse débouchant sur une zone d'évidement.

Sur ce point, il est en outre précisé que lorsqu'une ligne de faiblesse du support débouche sur une attache fragilisée (c'est-à-dire directement sur un point du contour de l'élément détachable), la rupture de cette ligne de faiblesse lors du procédé de détachement de l'invention peut engendrer une rupture locale de l'attache fragilisée au niveau de la jonction avec la ligne de faiblesse considérée.

En outre, malgré le fait que les zones d'évidement 508A et 508B sont de plus grande taille que celles aménagées dans la carte 401, il est possible de conserver un bon maintien du corps de carte 502 en position attachée car les portions de contour libres 507 représentent une proportion plus faible du contour du corps de carte que dans le cas des figures 1A et 2, par exemple. Ceci permet de réduire les risques d'endommagements du corps de carte (déformations en flexion...) et de ruptures inopinées des attaches fragilisées.

Comme représenté dans les figures 6 et 8, par exemple, il est possible d'aménager des zones d'évidement longeant une proportion très importante du contour de l'élément détachable. Cette configuration permet de faciliter le détachement de l'élément détachable au détriment de la qualité de son maintien en position attachée.

La carte 601, par exemple, diffère uniquement de la carte 501 en ce que des zones d'évidement supplémentaires 618A et 618B sont aménagées le long du contour du corps de carte 602, de manière à réduire la longueur des attaches fragilisées du corps de carte au support, et ainsi affaiblir encore davantage le maintien du corps de carte 602 vis-à-vis du support 604.

Dans ce cas, les zones d'évidement 618A et 618B ne sont pas reliées à un bord externe du support 608 par une ligne de faiblesse. Ces zones d'évidement servent principalement à faciliter le détachement du corps de carte lorsque l'on rompt les attaches fragilisées.

La taille réduite des attaches fragilisées 806A et 806B permet en outre à ces dernières d'être rectilignes malgré la forme circulaire du corps de carte 802. Comme indiqué précédemment, il est plus facile de pratiquer des attaches fragilisées rectilignes que des attaches fragilisées courbes. En outre, la forme rectiligne des attaches fragilisées 806A et 806B permet de faciliter le détachement du corps de carte vis-à-vis des portions de support 804A et 804B une fois que les lignes de faiblesse 812A et 812B ont été rompues.

La carte 901 représentée en figure 9 permet quant à elle d'améliorer le maintien du corps de carte par rapport à l'agencement de la carte 801, ce qui permet de limiter les risques d'endommagements et/ou de ruptures inopinées comme expliqué précédemment. Le maintien du corps de carte 902 peut être optimisé lorsque la condition suivante est respectée : $\alpha.1 = \alpha2 = \alpha3 = \alpha4 = \alpha5 = \alpha6 = 60°$.

On peut également envisager d'augmenter encore davantage le nombre d'attaches fragilisées maintenant le corps de carte 902 en position attachée.

D'autre part, les lignes de faiblesse agencées dans les modes de réalisation des figures 3 à 8 sont de préférence parallèles afin de permettre un détachement plus facile de l'élément détachable vis-à-vis de son support. En outre, ces lignes de faiblesse peuvent être alignées afin de faciliter encore davantage la séparation du support au niveau des lignes de faiblesse.

Par ailleurs, les lignes de faiblesse 512A et 512B, par exemple, sont de préférence agencées dans une région médiane du support considéré. De cette manière, un utilisateur peut saisir aisément les portions de support 504A et 504B au voisinage des lignes de faiblesse 512A et 512B afin de procéder aux étapes de pliage (E10 et E30) et de séparation (E20 et E40) des portions 504A et 504B. Les autres modes de réalisation de l'invention sont également compatibles avec cet arrangement particulier.

Le procédé de fabrication selon un mode de réalisation particulier de l'invention est à présent décrit en référence à la figure 10 et à la carte 501 représentée en figure 5.

On forme tout d'abord une ligne de faiblesse sur deux portions du contour du corps de carte 502, de manière à former les attaches fragilisées 506A et 506B reliant le corps de carte 504 au support de carte 504 (étape E11). Ces lignes de faiblesse peuvent être formées de diverses manières, comme expliqué ultérieurement en relation avec les exemples des figures 11A à 11E.

On pratique ensuite des zones d'évidement 508A et 508B dans le support de carte 504 de manière à ce que les portions du contour du corps de carte 502 dépourvues d'attache fragilisée soient séparées du support de carte 504 par lesdites zones d'évidement (étapes E21).

Une fois les zones d'évidement réalisées, on fabrique les lignes de faiblesse 512A et 512B dans le support de carte 504 de manière à ce qu'elles relient respectivement les zones d'évidement 508A et 508B aux bords externe 514A et 514B du support (étape E31). Ces lignes de faiblesse permettent en outre de séparer le support 504 en deux portions 504A et 504B, chacune de ces portions étant reliée par une attache fragilisée (506A et 506B, respectivement) au corps de carte 502.

En outre, chaque ligne de faiblesse réalisée à l'étape E31 est telle que, lorsque l'on plie le support le long de cette ligne de faiblesse jusqu'à sa rupture, aucune des attaches fragilisées 506A et 506B ne rompt totalement. Pour que cette condition soit respectée, on peut ajuster par exemple la robustesse des lignes de faiblesse 512A et 512B et/ou leur positionnement vis-à-vis des attaches fragilisées 506A et 506B, comme expliqué précédemment.

Le test de conformité décrit précédemment peut être utilisé pour vérifier si les lignes de faiblesse 512A et 512B sont conçues conformément à l'invention.

A noter que les étapes E11, E21 et E31 peuvent être réalisées dans un ordre quelconque et que les étapes décrites ci-dessus ne représentent qu'un exemple particulier du procédé de fabrication de l'invention. En particulier, les zones d'évidement 508A et 508B peuvent être formées avant les lignes de faiblesse 512A et 512B et/ou avant les attaches fragilisées 506A et 506B. Les lignes de faiblesse 512A et 512B et les attaches fragilisées 506A et 506B peuvent également être formées de manière séquentielle suivant un ordre quelconque. Cependant, les lignes de faiblesse 512A et 512B et les attaches fragilisées 506A et 506B sont de préférence formées simultanément.

Ce procédé de fabrication peut être appliqué de la même manière pour fabriquer les autres modes de réalisation décrits ci-avant.

Par ailleurs, une ligne de faiblesse au sens de l'invention peut être formée de diverses manières.

Par exemple, comme illustré en figures 11A et 11B, il est possible de former une ligne de faiblesse dans une carte en pratiquant une encoche longiligne sur la face avant (ligne de faiblesse 1120) ou la face arrière (ligne de faiblesse 1121) de la carte. On peut également former des encoches 1122 et 1123 en vis-à-vis sur les faces avant et arrière de la carte (figure 11C),

De manière alternative, on peut former une ligne de faiblesse en pratiquant une succession longiligne de points de rupture dans la carte. Ces points de rupture peuvent correspondre, par exemple, à des perforations 1124 traversant la carte (figure 11D) et/ou à des retraits de matière 1125 de forme quelconque (figure 11E) qui fragilisent localement la carte suivant une direction et une longueur déterminée.

**Revendications**

1. Procédé de détachement d'un élément détachable (502) compris dans un support (504), l'élément détachable comportant un contour dont au moins une portion est rattachée au support, les portions de contour rattachées au support l'étant toutes par des attaches fragilisées (506A, 506B), le support comprenant en outre au moins deux lignes de faiblesse (512A, 512B) permettant de séparer le support en au moins deux portions (504A, 504B) reliées par une attache fragilisée à l'élément détachable, chacune desdites lignes de faiblesse étant telle que, lorsque l'on plie le support le long de cette ligne de faiblesse jusqu'à sa rupture, aucune desdites attaches fragilisées ne rompt totalement, ledit procédé de détachement comprenant successivement :

   - une étape de pliage du support le long de chacune des lignes de faiblesse jusqu'à sa rupture, et
   - une étape de rupture des attaches fragilisées pour détacher l'élément détachable dudit support.

2. Procédé de fabrication d'un support (504) comprenant un élément détachable (502), ledit procédé de fabrication comprenant :

   - une étape de fabrication d'attaches fragilisées (506A, 506B) rattachant au moins une portion du contour de l'élément détachable au support, les portions de contour de l'élément détachable rattachées au support l'étant toutes par lesdites attaches fragilisées,
   - une étape de fabrication d'au moins deux lignes de faiblesse (512A, 512B) permettant de séparer le support en au moins deux portions (504A, 504B) reliées par une attache fragilisée à l'élément détachable, chacune desdites lignes de faiblesse étant telle que, lorsque l'on plie le support le long de cette ligne de faiblesse jusqu'à sa rupture, aucune desdites attaches fragilisées ne rompt totalement.

3. Support (504) comprenant un élément détachable (502) comportant un contour dont au moins une portion est rattachée au support, les portions de contour rattachées au support l'étant toutes par des attaches fragilisées (506A, 506B), le support comprenant en au moins deux lignes de faiblesse (512A, 512B) permettant de séparer le support en au moins deux portions (504A, 504B) reliées par une attache fragilisée à l'élément détachable, chacune desdites lignes de faiblesse étant telle que, lorsque l'on plie le support le long de cette ligne de faiblesse jusqu'à sa rupture, aucune desdites attaches fragilisées ne rompt totalement.

4. Support selon la revendication 3, dans lequel au moins une portion de contour dite libre (507A, 507B) de l'élément détachable est séparée dudit support par une zone d'évidement (508A, 508B).

5. Support selon la revendication 4, dans lequel ladite au moins une portion de contour libre forme plus de la moitié du contour dudit élément détachable.

6. Support selon la revendication 4 ou 5, dans lequel le contour de l'élément détachable comprend deux dites portions de contour libres situées en vis-à-vis par rapport à l'élément détachable.

7. Support selon l'une quelconque des revendications 4 à 6, dans lequel le contour de l'élément détachable comprend des portions courbes (407A, 407B, 407C, 407D), ces portions courbes faisant toutes partie desdites portions de contour libres.

8. Support selon la revendication 7, dans lequel les portions courbes correspondent auxdites portions de contour libres.

9. Support selon l'une quelconque des revendications 4 à 6, dans lequel le contour de l'élément détachable comprend des angles, ces angles faisant tous partie desdites portions de contour libres.

10. Support selon la revendication 9, dans lequel les angles correspondent auxdites portions de contour libres.

11. Support selon l'une quelconque des revendications 4 à 10, dans lequel au moins une dite zone d'évidement est reliée à un bord externe (514A, du support par une desdites lignes de faiblesse.

12. Support selon la revendication 11, dans lequel chaque dite zone d'évidement est reliée à un bord externe du support par une desdites lignes de faiblesse.

13. Support selon l'une quelconque des revendications 3 à 12 comprenant deux dites attaches fragilisées **caractérisées en ce que** au moins la ligne de faiblesse la plus proche desdites deux attaches fragilisées est agencée de manière à satisfaire la condition suivante :

$$D1 = D2 \pm 20\%$$

D1 et D2 correspondant aux distances (D51, D52, D53, D54) respectives entre ladite au moins une ligne de faiblesse et chacune desdites deux attaches fragilisées.

14. Support selon la revendication 13, dans lequel ladite au moins une ligne de faiblesse est sensiblement équidistante desdites deux attaches fragilisées.

15. Support selon l'une quelconque des revendications 3 à 14 comportant exactement deux lignes de faiblesse sensiblement parallèles l'une de l'autre.

16. Support selon la revendication 15, dans lequel lesdites lignes de faiblesse sont alignées.

17. Support selon l'une quelconque des revendications 3 à 16 comportant exactement deux lignes de faiblesse situées dans une région médiane du support.

18. Support selon l'une quelconque des revendications 3 à 17, dans lequel au moins une des attaches fragilisées est formée par une ligne de faiblesse ou par une languette étroite,

19. Support selon l'une quelconque des revendications 3 à 18, dans lequel l'élément détachable est une carte.

20. Support selon l'une quelconque des revendications 3 à 19, dans lequel ledit élément détachable comprend un microcircuit (520) et des moyens de communication avec un dispositif externe, lesdits moyens de communication comprenant au moins une antenne (522) de communication en champ proche ou des contacts électriques affleurants.

## FIG.1A
(art antérieur)

106A  108A  110
108B  102  106B
104A  104B  101
104
106B
116

## FIG.1B
(art antérieur)

106A  108A  110
102  101
108B  106B
104A  104B
104

## FIG.1C
(art antérieur)

102  110
106B  101
104A  104B
104

## FIG.1D
(art antérieur)

102
101
104A  104B
104

FIG.2
(art antérieur)

FIG.3

FIG.4

FIG.5A

FIG.5B

FIG.5C

## FIG.5D

## FIG.5E

## FIG.5F

## FIG.5G

FIG.6

FIG.7

FIG.8

FIG.9

FORMATION ATTACHES FRAGILISEES — E11

EVIDEMENT — E21

FORMATION LIGNES DE FAIBLESSE — E31

**FIG.10**

1121

1122

1120

1123

**FIG.11A**    **FIG.11B**    **FIG.11C**

1125

1124

**FIG.11D**    **FIG.11E**

Europäisches
Patentamt

European
Patent Office

Office européen
des brevets

**RAPPORT DE RECHERCHE EUROPEENNE**

Numéro de la demande

EP 11 16 0409

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 860 321 A1 (OBERTHUR CARD SYST SA [FR]) 1 avril 2005 (2005-04-01) * page 4, ligne 10 - ligne 31; figures 1-3 * * page 6, ligne 17 - ligne 19 * ----- | 1-20 | INV. G06K19/077 |
| A | EP 0 638 873 A2 (DAINIPPON PRINTING CO LTD [JP]) 15 février 1995 (1995-02-15) * abrégé; figure 12a * ----- | 1-20 | |

**DOMAINES TECHNIQUES RECHERCHES (IPC)**

G06K

Le présent rapport a été établi pour toutes les revendications

| Lieu de la recherche | Date d'achèvement de la recherche | Examinateur |
|---|---|---|
| Munich | 13 juillet 2011 | Degrendel, Antoine |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C02)

**EP 2 372 616 A1**

**ANNEXE AU RAPPORT DE RECHERCHE EUROPEENNE
RELATIF A LA DEMANDE DE BREVET EUROPEEN NO.**

EP 11 16 0409

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-07-2011

| Document brevet cité au rapport de recherche | | Date de publication | Membre(s) de la famille de brevet(s) | | Date de publication |
|---|---|---|---|---|---|
| FR 2860321 | A1 | 01-04-2005 | WO<br>US | 2005034030 A1<br>2007108294 A1 | 14-04-2005<br>17-05-2007 |
| EP 0638873 | A2 | 15-02-1995 | DE<br>DE<br>US | 69428648 D1<br>69428648 T2<br>5581065 A | 22-11-2001<br>11-07-2002<br>03-12-1996 |

EPO FORM P0460

**EP 2 372 616 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5936227 A